# EUROPÄISCHE PATENTSCHRIFT

(11) **EP 1 616 079 B1**
(45) Veröffentlichungstag und Bekanntmachung des Hinweises auf die Patenterteilung: **14.03.2012**
(21) Anmeldenummer: 04723152.7
(22) Anmeldetag: 25.03.2004
(51) Int. Cl.: F01C 1/22, F01C 17/06

(54) **DREHKOLBENMASCHINE**
ROTATING PISTON MACHINE
MACHINE A PISTON ROTATIF

(30) Priorität: 01.04.2003 CZ 20030926
(43) Veröffentlichungstag der Anmeldung: 18.01.2006
(73) Patentinhaber: Zelezny, Eduard, 140 00 Praha 4 (CZ); Tolarova, Simona, 140 00 Praha 4 (CZ); Zelezny, Filip, 140 00 Praha 4 (CZ)
(72) Erfinder: ZELEZNY, Eduard, 140 00 Praha 4 (CZ)
(74) Vertreter: Fischer, Michael
(86) Internationale Anmeldenummer: PCT/CZ2004/000016
(87) Internationale Veröffentlichungsnummer: WO 2004/088093

(56) Entgegenhaltungen:
- DE-B- 1 121 932
- DE-C- 522 299
- FR-A- 907 575
- GB-A- 146 237
- US-A- 4 008 988
- US-A- 4 300 874

## Beschreibung

Die Erfindung betrifft eine Drehkolbenmaschine mit den Merkmalen des Oberbegriffs des Anspruchs 1. Eine solche Drehkolbenmaschine ist z.B. aus der DE-A-11219 32 bekannt.

Es sind bereits Konstruktionen bekannt, bei denen der Kolben eine einfache Rotationsbewegung ausführt. Der Kolben befindet sich hier exzentrisch in einem ringförmigen Mantel und ist mit ausziehbaren Dichtungen ausgestattet, die sich an die sich ändernde Entfernung zwischen dem Kolben und dem ringförmigen Mantel anpassen und gleichzeitig die sich ändernden Arbeitsräume zwischen Kolben und Zylindermantel abgrenzen. Eine derartige Anordnung erlaubt jedoch keine großen Drücke bzw. Temperaturen, daher sind diese nur als Gebläse einsetzbar. Des Weiteren sind Konstruktionen bekannt, bei denen der Kolben eine zusammengesetzte Rotationsbewegung, d.h. eine Rollbewegung ausführt. Hierbei rollt - vor allem mit Hilfe von Zahnrädern - ein größerer Kreis (zum Beispiel ein zentrisches Kreisrad einer Innenverzahnung) an einem unbeweglichen kleineren Kreis (zum Beispiel zentrisches Kreisrad einer Außenverzahnung) ab. Die Verhältnisse der Durchmesser beider Kreise bestimmen die Scheitelpunktanzahl des Kolbens, die eine übereinstimmende Kurve beschreiben, sowie die Anzahl der durch den Kolben abgegrenzten Arbeitsräume. Wenn dieses Verhältnis 2:1 beträgt, hat der Kolben zwei Scheitelpunkte und grenzt zwei Arbeitsräume ab, wenn dieses Verhältnis 3:2 beträgt, hat der Kolben drei Scheitelpunkte und grenzt drei Arbeitsräume ab usw. Der Nachteil dieser Anordnung besteht darin, dass wenn mehr als zwei Kolbenscheitelpunkte vorliegen, die Mantelkrümmung eine für den Verbrennungsraum sehr ungünstige Form aufweist, und darüber hinaus das Verhältnis zwischen größtem und kleinstem Volumen des Arbeitsraumes prinzipiell eingeschränkt ist. Eine Anordnung mit zwei Scheitelpunkten kann jedoch einen günstigeren Verbrennungsraum und ein besseres Verhältnis zwischen größtem und kleinstem Arbeitsraum bieten, es ergibt sich jedoch - ebenfalls aus dem Prinzip bedingt - ein ungünstiges Verhältnis der Kolbenfläche, belastet durch den Arbeitsdruck, zum größtmöglichen kritischen Durchmesser der Welle, auf der sich der Kolben befindet. Daher ist eine derartige Anordnung nicht geeignet für Motoren, sondern nur für Gebläse oder Pumpen und Kompressoren mit kleinem Arbeitsdruck.

Es ist ferner eine weitere Bewegungsart des Kolbens mit zwei Scheitelpunkten bekannt, wobei die beiden Scheitelpunkte eine Kurve verlaufen. Dabei dreht sich der Kolben zugleich um zwei Rotationsachsen und verschiebt sich in Richtung senkrecht zu beiden Rotationsachsen. Bei dieser Konstruktion ist der Kolben an zwei parallelen Wellen verschiebbar senkrecht zu ihren Drehachsen gelagert, wobei die Richtungen der verschiebbaren Bewegungen des Kolbens gegenüber den einzelnen Wellen gegenseitig senkrecht liegen. Eine Welle davon dient als Tragwelle, wobei die andere als Führungswelle dient, wobei die beiden Wellen nur in je einer Seitenwand gelagert werden können. Um die beiden Wellen in beiden Seitenwänden lagern zu können, ist bei einer Ausführung eine der Wellen hohl, als eine Buchse, ausgeführt, durch welche die zweite Welle durchläuft. Laut anderen bekannten Konstruktionen kann die Führungswelle durch einen oder mehrere aus der Seitenwand herausragende Zapfen ersetzt werden, an welchen der Kolben gleitet oder sich dreht. Auch die Tragwelle, an welcher der Kolben verschiebbar angeordnet ist, kann bei anderen Konstruktionen durch eine Welle mit einem Kurbelzapfen ersetzt werden, an welchem der Kolben drehbar angeordnet ist, wobei die Führungswelle, wie erwähnt, durch Zapfen ersetzt wird. Auch diese alle Ausführungen der konchoidenartigen Konstruktion haben gemeinsame Nachteile, vor allem die mangelhafte Tragfähigkeit der Tragwelle und die ungenaue und verschleißempfindliche Führung des Kolbens, weshalb diese Konstruktionen, obwohl sie bereits vom Anfang des 20. Jahrhunderts bekannt sind, sich nicht durchgesetzt haben und nur im Stadium einer Idee geblieben sind.

Das Dokument DE 1121932 beschreibt eine Drehkolbenmaschine mit einem Kolben, der zwei Scheitelpunkte besitzt, in einer zylindrischen Kammer um zwei gemeinsam parallele Rotationsachsen drehbar sowie in Richtungen senkrecht zu diesen parallelen Achsen verschiebbar gelagert ist. Die Schubbewegung laut Dokument DE 1121932 betrifft eine unerwünschte Bewegung des Kolbens gegenüber den Drehachsen, was aus dem Prinzip der konchoiden Kolbenbewegung folgt, wie oben beschrieben. Es handelt sich nicht um gegenseitige Bewegung, d.h. Annäherung und Entfernung, der beiden parallelen Drehachsen der Wellen. Die Menge des Arbeitsmediums sowie das Drehmoment können nicht stufenlos und auch beim Laufe der Maschine geändert werden.

Die Nachteile des bisherigen Standes der Technik werden durch eine Drehkolbenmaschine mit den Merkmalen des Anspruchs 1 überwunden.

Ein weiteres Merkmal der Erfindung ist, dass der Führungsring auf seiner dem Kolben abgewandten Frontseite verschiebbar, in Richtung senkrecht zur Richtung seiner verschiebbaren Verbindung mit dem Kolben, mit einem unterstützenden Gleiter versehen ist, der auf einem, an der Tragwelle gegenüber dem tragenden Exzenter parallel und um 180 Grad gedreht angeordnetem, Führungsexzenter drehbar aufgesetzt ist.

Nach dem letzten Merkmal ist die Erfindung derart gekennzeichnet, dass die Räume zwischen den Gleitelementen, mit Vorteil Zapfen oder Nasen, bzw. dem unterstützenden Gleiter einerseits und den Führungselementen mit Vorteil Buchsen oder Furchen, andererseits geschlossen sind und mit Öffnungen für den Eintritt und Austritt von Schmiermittel versehen sind.

Die Erfindung ist auf den beigefügten Zeichnungen näher dargestellt, auf denen die Abbildungen 1 und 2 eine schematische Maschinenkonstruktion zeigen. Die Abbildung 3 zeigt die Ausführung laut Erfindung, wo der Kolben durch Führungsringe geführt und auf dem mit der Tragachse verbundenen tragenden Exzenter gelagert ist. Weitere Ausführungen sind auf den Abbildungen 4 und 5 schematisch und auf der Abbildung 6 im Schnitt gezeigt.

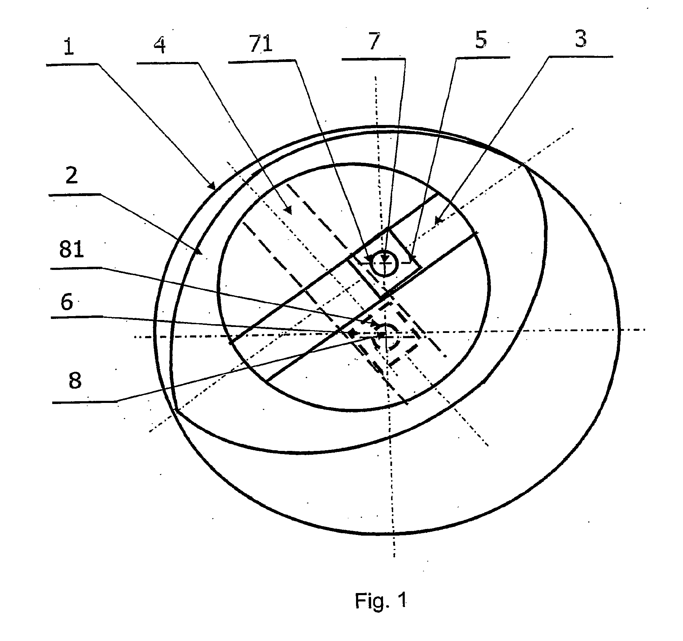

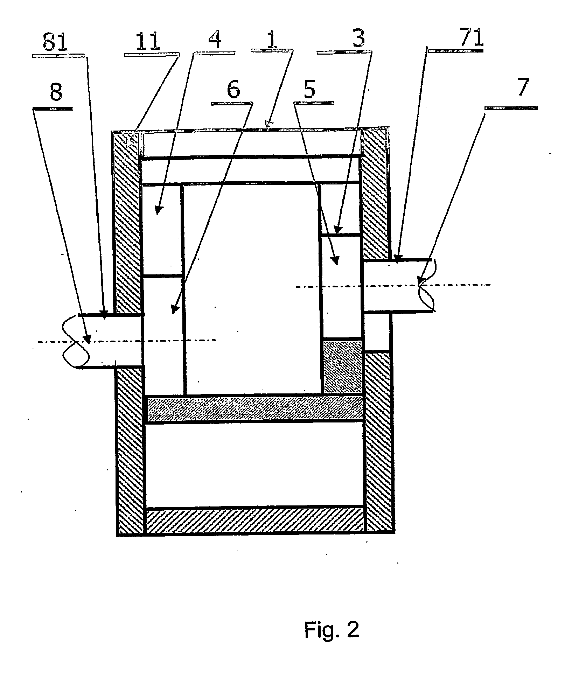

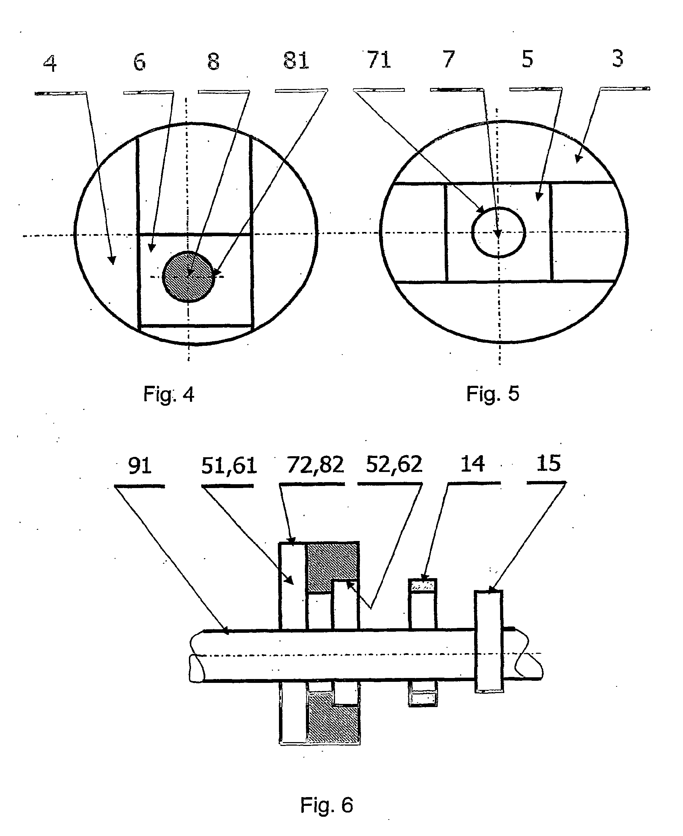

Nach der Abbildung 1 ist der Kolben 2 im gekrümmten Mantel 1 des Zylinders angeordnet, der Kolben 2 ist mit zueinander senkrecht stehenden Furchen 3, 4 ausgestattet, die die Gleitelemente des Kolbens 2 bilden. Mit diesen Furchen 3, 4 ist der Kolben 2 auf zwei Führungselementen 5, 6 gelagert, die immer mit einer der Wellen 71, 81 fest verbunden sind, deren Achsen 7, 8 parallel verlaufen. Auf der Abbildung 2 wird der Mantel 1 des Zylinders an beiden Seiten durch Seitenwände 11 abgeschlossen, in denen die Wellen 71, 81 drehbar gelagert sind. Die Anordnung der Gleitelemente 3, 4 und der Führungselemente 5, 6 auf den gegenüberliegenden Seiten des Kolbens und auf den Wellen 71, 81 wird auf Bild 4 und Bild 5 dargestellt. Bei der Drehung mit einer der Wellen 71, 81 dreht sich damit auch das fest verbundene Führungselement 5, 6, (Abb.4, 5) das dann den Kolben mit Hilfe des betreffenden Gleitelementes 3, 4 (zum Beispiel Furchen) dreht. Der Kolben dreht sich dann mit Hilfe seines zweiten Gleitelementes 4, 3, des zweiten Führungselementes 6, 5 und der zweiten Welle 81, 71 auch um die zweite Achse 8, 7. Wenn sich die Scheitelpunkte in gleicher Entfernung von der Mitte des Kolbens 2 befinden, beschreiben beide eine übereinstimmende Krümmung des Mantels 1, die dann zusammen mit der Verbindungslinie beider Scheitelpunkte zwei voneinander getrennte Räume bildet.

Die parallel laufende Rotationsbewegung des Kolbens 2 um zwei parallele Achsen 7, 8 bewirkt, dass bei der Bewegung entlang des Mantels 1 sich eine gekrümmte Verbindungslinie der Scheitelpunkte des Kolbens 2 von diesem Mantel 1 entfernt, während die andere Verbindungslinie sich diesem Mantel 1 annähert. Bei Drehung der Wellen vergrößert sich der Raum zwischen einer Verbindungslinie der Scheitelpunkte des Kolbens 2 und dem Mantel 1 von seinem Minimum auf sein Maximum, während sich der Raum zwischen der zweiten Verbindungslinie von seinem Maximum auf sein Minimum verkleinert. Wenn der Mantel 1 und/oder die Seitenwand 11 des Zylinders auf der einen Seite mit einer Eintrittsöffnung und auf der gegenüberliegenden Seite mit einer Austrittsöffnung für ein flüssiges oder gasförmiges Medium versehen ist, dann beginnt sich dieses Medium durch Drehung von nur einer der Wellen auf der einen Seite in den Raum zwischen Mantel 1 und Kolben 2 anzusaugen und auf der gegenüberliegenden Seite aus diesem Raum zu verdrängen. In diesem Fall arbeitet die Maschine als Pumpe oder Kompressor. Wird auf der einen Seite des Zylinders in den Raum zwischen Mantel 1 und Kolben 2 ein Druckmedium zugeführt, dann entsteht durch seinen Druck auf die durch die Verbindungslinie der Scheitelpunkte und der Breite des Kolbens 1 gegebene Fläche eine Kraft, die außerhalb der einen Rotationsachse 7 hindurchgeht und somit einen Moment zu dieser Achse hervorruft. Durch diesen Moment drehen sich die Welle 71 und damit auch der Kolben 2 und die zweite Welle 81.

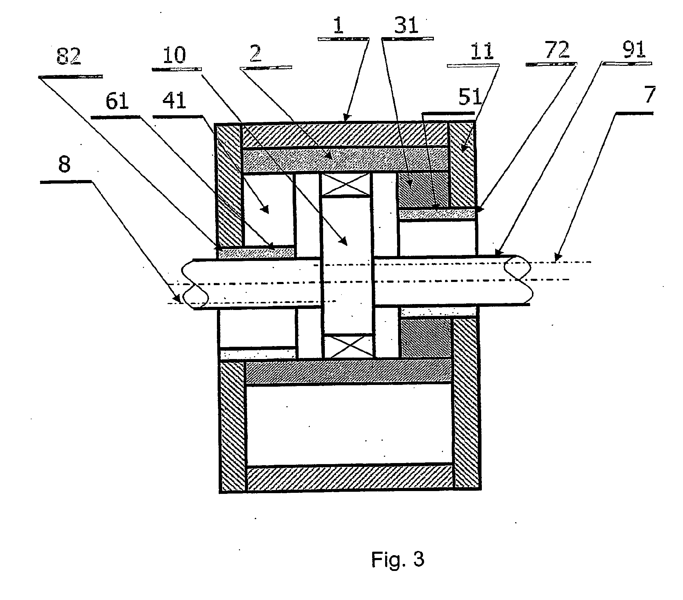

Bei einer Anordnung laut der Erfindung wird nur eine der Wellen 71, 81 als tragende verwendet und in beiden Seitenwänden gelagert, wobei die andere durch einen Führungsring 72, 82 ersetzt wird, der ebenfalls drehbar in der Seitenwand 11 gelagert und der ebenfalls mit einem Führungselement 51, 61 ausgestattet ist, das mit dem Gleitelement 31, 41 im Kolben 2 verbunden ist. Bei einer anderen Anordnung laut der Erfindung ist der Kolben drehbar (zum Beispiel mit Hilfe eines Lagers) auf dem tragenden Exzenter 10 gelagert (Abb. 3), der sich auf der Tragwelle 91 befindet, die in vorzugsweise beiden Seitenwänden 11 drehbar gelagert ist. Die Tragwelle 91 geht durch die Führungsringe 72, 82, und ihre Drehachse liegt in der Ebene der Achsen 7, 8 der Führungsringe 72, 82, und zwar in der Mitte zwischen ihnen. Die Außermittigkeit des tragenden Exzenters 10 ist gleich der halben Entfernung zwischen den Achsen 7, 8. Bei der Rotation des Kolbens 2, der durch die Führungsringe 72, 82 geführt wird, bewegt sich der Mittelpunkt des tragenden Exzenters 10 entlang des übereinstimmenden Weges mit dem Mittelpunkt des Kolbens 2. Die Belastung des Kolbens 2 wird dann komplett über den tragenden Exzenter 10 und die Tragwelle 91 übertragen, damit werden die Führungsringe 72, 82 durch den Druck am Kolben nicht belastet. Bei der Ausführung nach der Abbildung 3 können große Drücke auf den Kolben ausgeübt werden.

Entsprechend der Erfindung kann ferner bei der erst beschriebenen Anordnung mit der als tragende ausgeführten Führungswelle 71 der Führungsring 72, 82 in der Seitenwand 11 oder an der Seitenwand 11 drehbar und zugleich gegenüber der als tragende ausgeführten Führungswelle 71 verschiebbar gelagert werden. Die letztgenannte Lagerung kann dann entweder in oder an der Seitenwand 11, oder auch gemeinsam mit der Seitenwand 11 stattfinden. In diesem Fall wird weder die Tragwelle 91 noch der Exzenter 10 verwendet, die Belastung des Kolbens wird jedoch durch die ausreichend dimensionierte und beidseitig gelagerte Welle 71 übertragen. Durch Änderung der Entfernung zwischen den Drehachsen des Führungsringes 72, 82 und der als tragende ausgeführten Führungswelle 71 kann sich kontinuierlich und während des Betriebes der Maschine sowohl das Verhältnis zwischen dem maximalen und minimalen Raum zwischen der Verbindungslinie der Scheitelpunkte und dem gekrümmten Mantel, und damit auch die Menge des angesaugten oder expandierenden und herausgedrückten Mediums, als auch die Größe des Momentes zur Drehachse 7 stufenlos ändern. Bei einer hintereinander geschalteten Konstruktion von mindestens zwei derart angeordneten Maschinen entsprechend der Erfindung (zum Beispiel eine Maschine als Pumpe und die zweite Maschine als Motor für ein gasförmiges oder flüssiges Medium) ändert sich bei relativer Bewegung des Führungsringes 72,82 und der Welle 71 stufenlos sowohl die Umdrehungszahl als auch das Verhältnis der Momente beider verbundenen Maschinen.

Bei der Ausführung mit tragendem Exzenter 10 und der Tragwelle 91 besteht nach dem Beispiel der Ausführung ein weiteres Merkmal der Erfindung darin, dass die Funktion beider Führungsringe derart verbunden wird, dass der Führungsring 72, 82 nur an einer Seite des Kolbens 2 angebracht und nach der Abbildung 6 derart modifiziert ist, dass er neben dem Führungselement 51, 61, das sich auf der dem Kolben zugewandten Seite befindet, darüber hinaus auf der dem Kolben abgewandten Seite noch ein unterstützendes Führungselement 52, 62 besitzt, in dem auf dem Hilfsexzenter 15 ein verschiebbarer Gleiter 14 gelagert ist. Dieser Hilfsexzenter 15 hat die gleiche Außermittigkeit wie der tragende Exzenter 10 und ist fest auf der Tragwelle 91 angeordnet und um 180° gegenüber dem tragenden Exzenter 10 gedreht. Somit können beide Führungsringe an einer der beiden Stellen ihrer Einbringung vereinigt werden. Es ist natürlich offensichtlich, dass es aus Produktionsgründen günstiger ist, den vereinigten Führungsring an der Stelle des Führungsringes 82 unterzubringen, d.h. in der Art und Weise, dass sein Führungselement 61 im Gleitelement 41 des Kolbens 2 verschiebbar gelagert ist in senkrechter Richtung zur Geraden, die beide Scheitelpunkte des Kolbens 2 verbindet.

Alle Maschinen mit sich bewegenden Bestandteilen haben viele Stellen, die geschmiert bzw. gekühlt werden müssen. Bei einer Maschine entsprechend der Erfindung muss jedoch keine eigenständige Pumpeinrichtung eingesetzt werden, denn gemäß eines der Merkmale der Erfindung können die sich ändernden Räume zwischen bestimmten sich zueinander bewegenden Bestandteilen, zum Beispiel zwischen den Gleitelementen 3, 4, 31, 41 bzw. dem Gleiter 14 auf der einen Seite und zwischen den Führungselementen 5, 6, 51, 61, 52, 62 auf der anderen Seite, als Pumpeinrichtungen für Schmiermittel und/oder Kühlmedium verwendet werden mit der Maßgabe, dass diese Räume an den Seiten abgeschlossen sind und mit Eintritts- und Austrittsöffnungen für das angeführte Medium versehen werden. Dadurch entfallen nicht nur die sonst meist teuren und schweren Pumpeinrichtungen, sondern darüber hinaus kann beim Hineinpumpen des Mediums in die Maschine das Schmiermittel und/oder Kühlmedium über die Schmier- und/oder Kühlstelle mit Unterdruck eingeführt werden, damit ist der Verbrauch dieser Medien nur sehr gering.

Die Drehkolbenmaschine nach dieser Erfindung zeigt sowohl nach den Beispielen der Ausführung als auch nach anderen sich aus den Patentansprüchen ergebenden Ausführungen im Vergleich mit bisher bekannten Kolbenmaschinen seine Vorteile darin, dass sie gegenüber den Maschinen mit verschiebbarem Kolben kleiner, leichter und vollkommen ausgewogen ist, gegenüber Zahnradmaschinen eine höhere Leistung und geringere Lärmentwicklung aufweist, gegenüber Maschinen mit an Zahnrädern abrollendem Kolben eine geringere Lärmentwicklung, ein besseres Verhältnis zwischen maximaler und minimaler Größe des Arbeitsraumes sowie einen geringeren Verbrauch an Schmiermitteln aufweist. Es besteht auch keine Abhängigkeit zwischen dem Durchmesser der Welle und der belasteten Kolbenfläche, was einen Einsatz bei hohen Drücken, zum Beispiel bei Verbrennungsmotoren oder bei sehr hohen Drücken, zum Beispiel bei Hydraulikpumpen ermöglicht.

## Patentansprüche

1. Drehkolbenmaschine, insbesondere ein kompressor, eine Pumpe oder ein Motor, mit einem auf einer Tragwelle (91) gelagerten Drehkolben, der die Arbeitsräume mit sich änderndem Volumen abgrenzt, wobei der Kolben (2) in einem Zylinder mit zwei Seitenwänden (11) und einem gekrümmten Mantel (1) angeordnet und einerseits drehbar um zwei gemeinsam parallele, senkrecht zu den Seitenwänden (11) des Zylinders liegende Rotationsachsen (7, 8) und andererseits verschiebbar in zwei sowohl zueinander als auch zu den parallelen Rotationsachsen (7, 8) senkrechten Richtungen gelagert ist,
**gekennzeichnet durch**
mindestens einen an oder in der Seitenwand (11) drehbar gelagerten Führungsring (72, 82), der verschiebbar mit dem Kolben (2) verbunden ist, wobei der Kolben (2) an der Tragwelle (91) drehbar mittels eines mit der Tragwelle (91) verbundenen tragenden Exzenters (10) gelagert ist,
und der Führungsring (72, 82) auf seiner dem Kolben (2) zugewandten Frontseite mit einem Führungselement (51, 61) versehen ist, auf dem die mit dem Kolben (2) verbundenen Gleitelemente (31, 41) aufgesetzt sind.

2. Drehkolbenmaschine nach dem Anspruch 1,
**gekennzeichnet dadurch, dass**
der Führungsring (72, 82) auf seiner dem Kolben (2) abgewandten Frontseite mit einem unterstützenden Gleiter (14) verschiebbar, in Richtung senkrecht zur Richtung seiner verschiebbaren Verbindung mit dem Kolben (2), verbunden ist, welcher Gleiter (14) auf einem, an der Tragwelle (91) gegenüber dem tragenden Exzenter (10) parallel und um 180 Grad gedreht angeordnetem Führungsexzenter (15) drehbar aufgesetzt ist.

3. Drehkolbenmaschine nach dem Anspruch 1 und 2,
**gekennzeichnet dadurch, dass**
die Räume zwischen den Gleitelementen (3, 4, 31, 41), mit Vorteil Zapfen oder Nasen, bzw. dem unterstützenden Gleiter (14) einerseits und den Führungselementen (5, 6, 51, 61, 52, 62), mit Vorteil Buchsen oder Furchen, andererseits, geschlossen sind und mit Öffnungen für den Eintritt und Austritt von Schmiermittel versehen sind.

## Claims

1. A machine with a rotating piston, especially compressor, pump or engine, with a piston fitted on a supporting shaft (91), and creating workspaces with alternately changing volumes, the piston (2) arranged inside the cylinder formed by two sidewalls (11) and by curved casing (1) and fitted on the one hand in a rotating way around two parallel axis (7, 8) of rotation being normal to the side walls of the cylinder (11) and on the other hand in a sliding way in two directions, normal one to the other and to the parallel revolving axes (7, 8),
**characterised by**
at least one guiding ring (72, 82) mounted in the revolving way on or in the side wall (11) and connected in a sliding way with the piston (2), whereas the piston (2) mounted on the supporting shaft (91) in rotating way by means of a supporting eccentric (10) connected with the supporting shaft (91) and the guiding ring (72, 82) provided on its front side facing the piston (2) with a guiding element (51, 61), to the guiding elements (51, 61) attached sliding elements (31, 41) connected with the piston (2).

2. A machine with a rotating piston according to the claim 1,
**characterised by** that
the guiding ring (72, 82) provided on its front side reversed of the piston (2) is connected with an auxiliary gliding pin (14) in a sliding way in direction perpendicular to the direction of its sliding connection with the piston (2), whereas the gliding pin (14) mounted in a revolving way on the guiding eccentric (15) mounted on the supporting shaft (91) in parallel with the supporting eccentric (10) and turned by 180 degrees in relation to it.

3. A machine with a rotating piston according to the claim 1,
**characterised by that**
the spaces among the sliding elements (3, 4, 31, 41), preferably pivots or lugs, optionally between the gliding pin (14) on one side and the guiding elements (5, 6, 51, 61, 52, 62), preferably casings or slots, on the other side, are closed and provided with openings for lubricant inlet and outlet.

## Revendications

1. Machine à piston rotatif, en particulier compresseur, pompe ou moteur, qui comporte un piston rotatif placé sur l'arbre (91), délimitant des chambres de travail successives à volume variable, le piston (2) se trouvant dans un cylindre pourvu de deux parois (11) latérales et d'un corps (1) arqué, ledit piston d'une part rotatif autour de deux axes (7, 8) de rotation parallèles, les axes (7,8) verticaux par rapport aux parois (11) latérales du cylindre, et ledit piston d'autre part coulissant dans deux directions verticales l'une par rapport à l'autre et également par rapport aux axes (7, 8) de rotation parallèles,
**caractérisé par**
au moins une bague (72, 82) de guidage rotatif disposée sur ou dans la paroi (11) latérale, qui est reliée par coulisse au piston (2), lequel piston (2) est disposé en rotation sur l'arbre (91) à l'aide d'un excentrique (10) porteur relié à l'arbre (91) et la bague (72, 82) de guidage sur sa face avant en direction du piston (2) est équipée d'un élément (51, 61) de guidage, sur lequel sont posés les éléments (31, 41) de coulissants reliés au piston (2).

2. Machine à piston rotatif selon la revendication 1,
**caractérisé en ce que**
la bague (72, 82) de guidage sur sa face avant détournée du piston (2) est reliée par coulisse a un coulisseau (14) perpendiculairement en direction de son raccord coulissant avec le piston (2), lequel coulisseau (14) rotatif est disposé sur un excentrique (15) de guidage, monté sur l'arbre (91) parallèlement à l'excentrique (10) et tourné à 180°.

3. Machine à piston rotatif selon les revendications 1 et 2,
**caractérisé en ce que**
les espaces entre les éléments (3, 4, 31, 41) coulissants, en priorité des chevilles ou des cames, éventuellement entre le coulisseau (14) d'un côté et les éléments (5, 6, 51, 61, 52, 62) de guidage, en priorité des gaines ou des coulisses, de l'autre côté, sont fermés et munis d'ouvertures d'admission et d'échappement du lubrifiant.
